# EUROPEAN PATENT APPLICATION

(11) **EP 4 485 191 A1**
(43) Date of publication of application: **01.01.2025**
(21) Application number: 22936361.9
(22) Date of filing: 08.11.2022
(51) Int. Cl.: G06F 9/455

(54) **SERVICE STARTING METHOD AND RELATED DEVICE**

(30) Priority: 08.04.2022 CN 202210368027
(71) Applicant: Huawei Cloud Computing Technologies Co., Ltd., Gui'an New District, Guizhou 550025 (CN)
(72) Inventor: ZHANG, Ping, Gui' An New District Guizhou 550025 (CN); FENG, Jia, Gui' An New District Guizhou 550025 (CN)
(74) Representative: MERH-IP Matias Erny Reichl Hoffmann Patentanwälte PartG mbB
(86) International application number: PCT/CN2022/130458
(87) International publication number: WO 2023/193433

(57) **Abstract**

This application provides a service start method, used in a serverless service, and including: obtaining service code submitted by a user, storing the service code in a shared memory, and starting a service container, where the service container runs the service code by using the shared memory. In the method, the service container runs the service code by using the shared memory, thereby reducing an I/O delay caused by reading the service code from a system disk, shortening a start time, improving cold start efficiency, and meeting a performance requirement of the user. In addition, in the method, the obtained service code is stored in the shared memory, thereby reducing an I/O delay caused by writing a file to the system disk, further shortening the start time, and improving cold start efficiency.

## Description

This application claims priority to Chinese Patent Application No. 202210368027.0, filed with the China National Intellectual Property Administration on April 8, 2022 and entitled "SERVICE START METHOD AND RELATED APPARATUS", which is incorporated herein by reference in its entirety.

### TECHNICAL FIELD

This application relates to the field of cloud computing technologies, and in particular, to a service start method and apparatus, a server, a computer-readable storage medium, and a computer program product.

### BACKGROUND

To adapt to continuous development of cloud computing technologies, new application development modes are emerging. A typical application development mode is a serverless computing (serverless computing) development mode. Specifically, the serverless computing development mode provides a micro architecture based on platform-as-a-service (Platform-as-a-Service, PaaS). In the micro architecture, a server is separated from application development, and a cloud platform is responsible for configuring, maintaining, and expanding infrastructure of the server, so that a pay-per-usage (pay-per-usage) development mode can be implemented for a user.

A cloud service developed in the serverless computing development mode may be referred to as a serverless service. The serverless service may have a plurality of service forms, in which function-as-a-service (Function-as-a-Service, FaaS) is a representative one, which allows a developer to build, compute, run, and manage an application of the developer in a form of a function, without maintaining infrastructure of a backend.

Cold start of the serverless service represented by FaaS is one of foundations of system elasticity. Cold start is a general term for a series of processes in which when the serverless service such as the function is triggered, no instance resource (a running environment, a computing resource, or the like) corresponding to the function in a cluster can be directly used to respond to a call request, and the cloud platform needs to allocate a computing resource to the function, load service code of the user, and start a runtime process, and the like.

Currently, the service code of the user is usually stored in a third-party storage service, for example, the simple storage service (simple storage service, S3) or the object storage service (object storage service, OBS). When cold start of the serverless service is triggered, a container process responsible for code downloading (also referred to as a download process) downloads the service code of the user from the third-party storage service to a host node, where the host node may be a local virtual machine node or a local bare metal node; a container process responsible for code decompression (also referred to as a decompression process) decompresses the service code to a system disk of the host node; and a container process responsible for code loading and execution (for example, a runtime process) loads decompressed service code from the system disk, to execute the call request of the serverless service.

However, the foregoing service start method takes a long time, has very low start efficiency, and cannot meet a performance requirement of a user.

### SUMMARY

This application provides a service start method. In the method, service code submitted by a user is stored in a shared memory, and a service container is started. The service container runs the service code by using the shared memory, to start a serverless service. This reduces an I/O delay caused by reading the service code from a system disk and an I/O delay caused by writing a file to the system disk, shortens a start time, improves cold start efficiency, and meets a performance requirement of the user. This application further provides a service start apparatus corresponding to the foregoing method, a server, a computer-readable storage medium, and a computer program product.

According to a first aspect, this application provides a service start method, used in a serverless service. The serverless service is a service developed in a serverless computing development mode. In the serverless development mode, a server is separated from application development, and a cloud platform is responsible for configuring, maintaining, and expanding a server infrastructure. The service start method in this application may be performed by a server (for example, a server on a cloud platform side).

Specifically, the server may obtain service code submitted by a user, store the service code in a shared memory, and then start a service container, where the service container runs the service code by using the shared memory. In the method, the service container runs the service code by using the shared memory, thereby reducing an I/O delay caused by reading the service code from a system disk, shortening a start time, improving cold start efficiency, and meeting a performance requirement of the user. In addition, in the method, the obtained service code is stored in the shared memory, thereby reducing an I/O delay caused by writing a file to the system disk, further shortening the start time, and improving cold start efficiency.

In some possible implementations, the service code submitted by the user may be compressed code, for example, a compressed code package. The server may decompress the service code submitted by the user, for example, the foregoing compressed code package, to obtain decompressed service code, and store the decompressed service code in the shared memory.

In this way, the service container can run the decompressed service code by using the shared memory, and then start the serverless service. The decompression procedure and the running procedure may be performed in parallel, so as to further improve cold start efficiency of the serverless service.

In some possible implementations, the server may start a code decompression container, where the code decompression container is configured to: decompress the obtained service code and store the decompressed service code in the shared memory. A decompression process may be encapsulated in the code decompression container, and a runtime process may be encapsulated in the service container. Both the decompression process and the runtime process can access the shared memory, and there is no need to write the service code into the system disk and read the service code from the system disk, thereby shortening a cold start time. In addition, process isolation can be implemented by encapsulating the foregoing processes in different containers, thereby ensuring security.

In some possible implementations, both the service container and the code decompression container are deployed on a bare metal server or a virtual machine. The bare metal server is a server on which no virtual machine is deployed for virtualization. When both the service container and the code decompression container are deployed on the bare metal server, communication overheads of a virtual machine can be reduced. When both the service container and code decompression container are deployed on the virtual machine, the virtual machine can be used to isolate the service from another service, to further ensure security.

In some possible implementations, the shared memory is located in a server for deploying the service container and the code decompression container. In other words, the shared memory, the service container, and the code decompression container may be on a same physical server. This lays a foundation for storing the service code by using the shared memory and running the service code by using the shared memory.

In some possible implementations, the service container and the code decompression container belong to a same pod. The pod is a smallest deployable computing unit that can be created and managed in the Kubernetes. The pod (like in a pod of whales or a pea pod) is a set of containers. The service container and the code decompression container in the same pod share storage, a network, and declarations of running the containers. In this way, the service container can run, by using the shared memory, the service code decompressed and stored by the code decompression container, thereby improving cold start efficiency of the serverless service.

In some possible implementations, the shared memory is located in the server for deploying the service container, and the shared memory is independent of a memory of the user in the server. When the serverless service is started, the shared memory is used to store the service code and the service code is loaded from the shared memory. Therefore, the memory of the user is not intruded, security is high, and user experience is better.

In some possible implementations, the serverless service includes any one of the following: function-as-a-service FaaS, backend-as-a-service BaaS, or a microservice. Function-as-a-service (FaaS) is also referred to as function-as-a-service or a cloud function, which is specifically a service that allows a developer to build, compute, run, and manage an application of the developer in a form of a function, without maintaining infrastructure of a backend. Backend-as-a-service is specifically a service that provides a backend cloud service for a mobile application and a web application. Backend-as-a-service makes a backend capability servitized, so that a developer does not need to develop a backend for each service used or accessed by an application, thereby simplifying an application development procedure. The microservice is specifically a small independent service that performs communication through a clearly defined application programming interface in an application. The microservice may be built around a service function. Each microservice can perform one function.

The service start method in this application may be used to start serverless services in different forms, has high usability and compatibility, and can meet requirements of different users.

In some possible implementations, a size of the shared memory is determined based on meta information of the service code, and the meta information includes a size of the service code or a size of the decompressed service code.

In the method, a memory of a specified size is allocated as the shared memory based on the size of the service code or the size of the decompressed service code, so that a decrease in resource utilization caused by an excessively large shared memory or a start failure or slow start of the serverless service caused by an excessively small shared memory can be avoided.

In some possible implementations, the server may alternatively first mount the shared memory, and then perform the foregoing steps of obtaining the service code submitted by the user and storing the service code in the shared memory. The server mounts the shared memory to accelerate cold start efficiency of the serverless service and improve memory resource utilization in a cluster.

In some possible implementations, the server may mount the shared memory in a static mounting manner. Specifically, the server may obtain a configuration file, where a type of a default volume in the configuration file is configured as a memory, and then the server mounts the shared memory based on the configuration file.

The static mounting manner supports pre-mounting of the shared memory. This can further shorten the cold start time of the serverless service and improve cold start efficiency.

In some possible implementations, the server may mount the shared memory in a dynamic mounting manner. Specifically, the server may receive a real-time event released by a management network element, where the real-time event is an event that triggers cold start of the serverless service; and then dynamically mount the shared memory based on the real-time event.

In the method, when receiving the event that triggers cold start of the serverless service, the server mounts the shared memory, to avoid long-term occupation of the shared memory and improve utilization of resources such as the memory.

In some possible implementations, the server may further unmount the shared memory when running of the serverless service is abnormal or completed, to reclaim a memory resource and improve resource utilization.

In some possible implementations, the shared memory is managed by a memory file system. The memory file system may manage a memory in a manner of a file system. The memory file system may address the memory to obtain an address space, which is also referred to as a memory address space. Data may be read and written by addressing the memory address space.

During specific implementation, the memory file system may be a temporary archive storage system. The temporary archive storage system may include a temporary archive storage system on a Unix-like system (including various derivative systems of Unix, such as FreeBSD, OpenBSD, and Solaris, or systems similar to conventional Unix, such as Minix and Linux). The temporary archive storage system includes but is not limited to a temporary file system (temporary file system, tmpfs), a random access memory file system (random access memory file system, ramfs), and a random access memory disk (random access memory, ramdisk).

By using the foregoing memory file system, the service code can be conveniently addressed, thereby improving efficiency of reading or writing the service code, and further improving efficiency of starting the serverless service.

In some possible implementations, the server may further present a start configuration interface to the user, where the start configuration interface supports the user in configuring a start manner, for example, standard start or quick start. Then, the server receives a start manner configured by the user through the start configuration interface, and when the start manner is quick start, performs the step of storing the service code in the shared memory.

In the method, the server can support the user in selecting a corresponding start manner based on a requirement. For example, in terms of efficiency or performance, the user can select the quick start manner to start the serverless service. For another example, in terms of costs, the user can select the standard start manner to start the serverless service.

According to a second aspect, this application provides a service start apparatus. The apparatus is used in a serverless service, and the apparatus includes the following function modules:
a communication module, configured to obtain service code submitted by a user, where
the communication module is further configured to store the service code in a shared memory; and
a start module, configured to start a service container, where the service container runs the service code by using the shared memory.

In some possible implementations, the communication module is specifically configured to:
store decompressed service code in the shared memory.

In some possible implementations, the start module is further configured to:
start a code decompression container, where the code decompression container is configured to: decompress the obtained service code and store the decompressed service code in the shared memory.

In some possible implementations, both the service container and the code decompression container are deployed on a bare metal server or a virtual machine.

In some possible implementations, the shared memory is located in a server for deploying the service container and the code decompression container.

In some possible implementations, the service container and the code decompression container belong to a same pod.

In some possible implementations, the shared memory is located in the server for deploying the service container, and the shared memory is independent of a memory of the user in the server.

In some possible implementations, the serverless service includes any one of the following: function-as-a-service FaaS, backend-as-a-service BaaS, or a microservice.

In some possible implementations, a size of the shared memory is determined based on meta information of the service code, and the meta information includes a size of the service code or a size of the decompressed service code.

In some possible implementations, the apparatus further includes a mounting module.

The communication module is further configured to obtain a configuration file, where a type of a default volume in the configuration file is configured as a memory.

The mounting module is specifically configured to mount the shared memory based on the configuration file.

In some possible implementations, the apparatus further includes a mounting module.

The communication module is further configured to receive a real-time event released by a management network element, where the real-time event is an event that triggers cold start of the serverless service.

The mounting module is specifically configured to dynamically mount the shared memory based on the real-time event.

In some possible implementations, the apparatus further includes:
an unmounting module, configured to unmount the shared memory when running of the serverless service is abnormal or completed.

In some possible implementations, the shared memory is managed by a memory file system.

In some possible implementations, the communication module is further configured to:
present a start configuration interface to the user;
receive a start manner configured by the user through the start configuration interface; and
when the start manner is quick start, perform the step of storing the service code in the shared memory.

According to a third aspect, this application provides a server. The server includes at least one processor and at least one memory. The at least one processor and the at least one memory communicate with each other. The at least one processor is configured to execute instructions stored in the at least one memory, to enable the server to perform the service start method according to the first aspect or any one of the implementations of the first aspect.

According to a fourth aspect, this application provides a computer-readable storage medium, where the computer-readable storage medium stores instructions. The instructions instruct a server to perform the service start method according to the first aspect or any one of the implementations of the first aspect.

According to a fifth aspect, this application provides a computer program product including instructions, and when the computer program product runs on a server, the server is enabled to perform the service start method according to the first aspect or any one of the implementations of the first aspect.

Based on the implementations provided in the foregoing aspects, this application may further combine the implementations to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of a service start system according to an embodiment of this application;
FIG. 2 is a flowchart of a service start method according to an embodiment of this application;
FIG. 3 is a schematic flowchart of a service start method according to an embodiment of this application;
FIG. 4 is an interface diagram of a start configuration interface according to an embodiment of this application;
FIG. 5 is a diagram of a scenario of a service start method according to an embodiment of this application;
FIG. 6 is a diagram of a structure of a service start apparatus according to an embodiment of this application; and
FIG. 7 is a diagram of a hardware structure of a service according to an embodiment of this application.

### DESCRIPTION OF EMBODIMENTS

In embodiments of this application, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A serverless service, also referred to as a serverless service, is a service developed in a serverless computing (serverless computing) development mode. The serverless computing development mode is a development mode in which a server is separated from application development, and a cloud platform is responsible for configuring, maintaining, and expanding infrastructure of the server. In view of this, the serverless service developed in the foregoing serverless computing development mode usually does not include the server, and a function of the server may be implemented by the cloud platform.

The serverless service may have a plurality of service forms. For example, the serverless service may include function-as-a-service (Function-as-a-Service, FaaS), backend-as-a-service (Backend-as-a-Service, BaaS), or a microservice (microservice).

Function-as-a-service is also referred to as function-as-a-service or a cloud function, which is specifically a service that allows a developer to build, compute, run, and manage an application of the developer in a form of a function, without maintaining infrastructure of a backend.

Backend-as-a-service is specifically a service that provides a backend cloud service for a mobile application and a web application. The backend cloud service includes but is not limited to cloud data/file storage, account management, and message pushing. Backend-as-a-service may be an alternative for middleware. In an example of the mobile application, backend-as-a-service can replace the mobile middleware to connect the mobile application to backend cloud storage through a unified application programming interface (application programming interface, API) and a software development kit (software development kit, SDK). On the basis of PaaS, backend-as-a-service makes a backend capability servitized by using an idea of software-as-a-service (Software-as-a-Service, SaaS), so that a developer does not need to develop a backend for each service used or accessed by an application, thereby simplifying an application development procedure.

The microservice is specifically a small independent service that performs communication through a clearly defined API in an application. The microservice may be built around a service function. Each microservice can perform one function. The microservice can run independently. Therefore, update, deployment, and expansion can be separately performed on each microservice to meet a requirement for a specific function of an application.

A start type of the serverless service may be cold start (cold start) or hot start (hot start). Cold start means that there is no process of the serverless service in a background, and a new process is created and allocated to the serverless service to start the serverless service. Hot start means that there is a process of the serverless service in a background, and the serverless service is started from the existing process.

For ease of understanding, cold start of a representative service form of the serverless service, namely, function-as-a-service, is used as an example for description. Cold start of a function is a general term for a series of processes in which when the serverless service, for example, a function, is triggered, no instance resource (for example, a running environment and a computing resource) corresponding to the function in a cluster can be directly used to respond to a call request, and a cloud platform needs to allocate a computing resource to the serverless service, load service code submitted by a user, start a runtime (runtime) process, and the like.

Compared with hot start, cold start slows down response of the serverless service. Therefore, how to optimize cold start performance of the serverless service becomes a major concern in the industry. Currently, the service code submitted by the user is usually stored in a third-party storage service, for example, the S3 or the OBS. When the serverless service triggers cold start, a download process downloads the service code from the third-party storage service to a host node. The host node may be a local virtual machine node or a local bare metal node. Then, a decompression process decompresses the service code to a system disk of the host node. A runtime process (which is usually encapsulated in a container form, and therefore may also be referred to as a runtime container (runtime container)) loads decompressed service code from the system disk, to execute the call request of the serverless service.

However, in a code loading and execution process, when the runtime process reads the service code from the system disk, there is a significant file reading I/O delay. Further, when the service code submitted by the user is a compressed code package, the service code further needs to be decompressed. In a decompression process, in addition to time consumed by a central processing unit (central processing unit, CPU) during decompression, an input/output (input/output, I/O) delay caused by writing a file to the system disk accounts for a significant proportion. In some scenarios, the I/O delay generated when the file is written into the system disk may even be referred to as a delay bottleneck of the decompression process. Consequently, double disk I/O overheads are generated. In some scenarios, the I/O overheads may become a delay bottleneck for cold start. In an application scenario that is sensitive to cold start performance of the serverless service and has a high requirement on a delay, for example, a web application, an applet, a real-time task, and a game application, a performance requirement of the user cannot be met.

In view of this, an embodiment of this application provides a service start method. This service start method applies to a serverless service. The server start method may be executed by a server. Specifically, the server obtains service code submitted by a user, stores the service code in a shared memory, and then starts a service container. The service container runs the service code by using the shared memory, to start the serverless service.

In the method, the service container runs the service code by using the shared memory, thereby reducing an I/O delay caused by reading the service code from a system disk, shortening a start time, improving cold start efficiency, and meeting a performance requirement of the user. In addition, in the method, the obtained service code is stored in the shared memory, thereby reducing an I/O delay caused by writing a file to the system disk, further shortening the start time, and improving cold start efficiency.

To make the technical solutions of this application clearer and easier to understand, the following describes a system architecture in embodiments of this application with reference to the accompanying drawings.

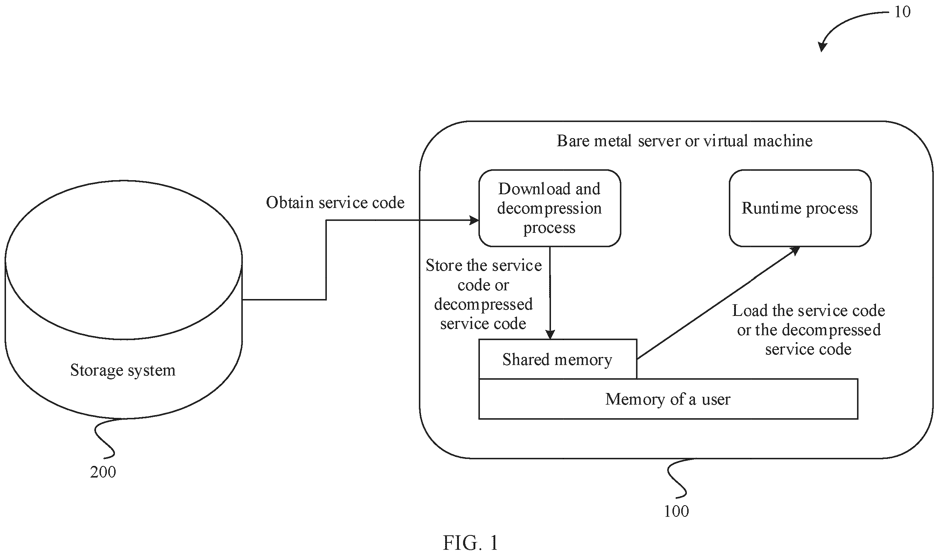

As shown in a diagram of an architecture of a service start system shown in FIG. 1, the service start system 10 includes a server 100 and a storage device 200. A communication connection, for example, a wired communication connection or a wireless communication connection, is established between the server 100 and the storage device 200.

The server 100 may be a server in a cloud environment, for example, a cloud server. The cloud server is a server that can be elastically scaled in a cloud computing cluster. In some embodiments, the server 100 may alternatively be a local physical server. Specifications (such as CPU frequency and a memory size) of the physical server are usually fixed. Similarly, the storage device 200 may be a cloud storage device, for example, the S3 device or the OBS device described above. In some embodiments, the storage device 200 may alternatively be a local physical storage device. Specifications (storage space size) of physical storage devices are usually fixed.

A service start apparatus is deployed on the server 100. The service start apparatus may be a software apparatus. The software apparatus may be directly deployed on the server 100. In other words, the software apparatus may be deployed on a bare metal server. In some embodiments, a virtual machine (virtual machine) may be further deployed on the server 100. The virtual machine is an emulator of the server 100. The emulator may be used to simulate a complete computer system that has a complete hardware system function and runs in an entirely isolated environment, and can provide a function of a physical computer. The software apparatus may alternatively be deployed on the virtual machine of the server 100. A storage system is deployed on the storage device 200. The storage system may include different types such as block storage, file storage, and object storage.

The service start apparatus includes a plurality of function modules. For example, the service start apparatus may include a communication module and a start module. The following describes functions of different modules.

The communication module is configured to: obtain, from the storage system of the storage device 200, service code submitted by a user, and store the service code in a shared memory. The shared memory may be a memory mounted to the server 100. In addition, in the server 100, the shared memory may be independent of a memory of the user. The memory of the user is a memory applied by the user for deploying the serverless service. In this example, the memory of the user may also be referred to as a pod memory. The shared memory may be additionally allocated by a cloud platform, and has an independent address space. In addition, a size of the shared memory can be adjusted. The size of the shared memory varies according to a size of the service code.

The start module is configured to start a service container. The service container is a container that runs the service code. A container is a virtualization technology different from a virtual machine. A process can be encapsulated in the container. This technology enables the process to run in an independent and isolated environment (including an independent file system, namespace, and resource view), thereby simplifying a service deployment procedure, enhancing service portability and security, and improving system resource utilization. In this embodiment, the service container runs the service code by using the shared memory. Specifically, a runtime process may be encapsulated in the service container, and the runtime process may load the service code from the shared memory, and execute a call request of the serverless service based on the service code, to start the serverless service.

Further, the service start apparatus may further include a decompression module. The service code submitted by the user may be a compressed code package. The decompression module is configured to decompress the compressed code package to obtain decompressed service code. Correspondingly, the communication module may store the decompressed service code in the shared memory.

In some embodiments, the start module may start a code decompression container. The code decompression container is configured to decompress the obtained service code and store the decompressed service code in the shared memory. A decompression process may be encapsulated in the code decompression container, and the decompression process may decompress the obtained service code and store the decompressed service code in the shared memory. Correspondingly, the runtime process may load the decompressed service code from the shared memory, and execute the call request of the serverless service based on the decompressed service code.

Obtaining the service code submitted by the user usually may be implemented by a download process. In the example in FIG. 1, the download process and the decompression process may be one process, and specifically, may be a download and decompression process. The download and decompression process is used to download the service code submitted by the user. When the service code is in a compressed format, for example, a compressed code package, the download and decompression process is further used to decompress the service code to obtain decompressed service code. Correspondingly, the runtime process may use the shared memory to run the decompressed service code, to start the serverless service.

The foregoing describes the system architecture of the container start system. The following describes a container start method in embodiments of this application with reference to the accompanying drawings.

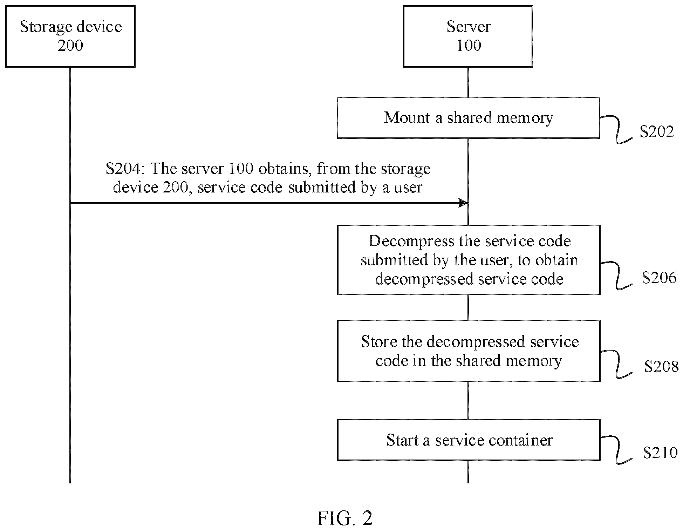

Refer to a flowchart of a service start method shown in FIG. 2. The method includes the following steps.

S202: A server 100 mounts a shared memory.

The shared memory, also referred to as a shared memory disk, is a memory that can be shared by different containers (such as a service container and a code decompression container) or different processes (such as a runtime process and a download and decompression process). As shown in FIG. 1, the shared memory may be located in the server 100 on which the service container is deployed. The server 100 further includes a memory of a user. The memory of the user is a memory exclusively used by the user. The memory of the user may be an inherent memory of the server 100, or a memory applied from a cloud platform for deploying the serverless service. The shared memory is an additional memory allocated to accelerate cold start, for example, an additional memory allocated by the cloud platform.

As shown in FIG. 1, when the serverless service is deployed in a container-based manner, the cloud platform can create an instance of an elastic computing service (elastic computing service, ECS) to deploy the serverless service in a container. The ECS may also be referred to as a cloud host. The cloud host is a virtual host created on a shared host machine, provides a virtual computing environment, and includes basic components such as a CPU, a memory, and an operating system. A memory (for example, the pod memory shown in FIG. 1) included in the cloud host is the memory of the user. To accelerate cold start, the cloud platform further additionally allocates the shared memory. The shared memory has an independent address space and is independent of the memory of the user.

In some possible implementations, the shared memory includes a memory file system. The memory file system may manage a memory in a manner of a file system. The memory file system may address the memory to obtain an address space, which is also referred to as a memory address space. Data may be read and written by addressing the memory address space. During specific implementation, the memory file system may be a temporary archive storage system. The temporary archive storage system may include a temporary archive storage system on a Unix-like system (including various derivative systems of Unix, such as FreeBSD, OpenBSD, and Solaris, or systems similar to conventional Unix, such as Minix and Linux). The temporary archive storage system includes but is not limited to a temporary file system (temporary file system, tmpfs), a random access memory file system (random access memory file system, ramfs), and a random access memory disk (random access memory, ramdisk).

When the server 100 mounts the shared memory, a static mounting manner or a dynamic mounting manner may be used. The following describes the static mounting manner and the dynamic mounting manner in detail.

The static mounting manner may be implemented by specifying a type of a default volume (also referred to as emptyDir) in a configuration file. Specifically, the server 100 may obtain a configuration file, where the configuration file includes configuration information of at least one storage volume (volume), the at least one volume includes a default volume, and a type of the default volume is configured as a memory. In this way, the server 100 may mount the shared memory based on the configuration file.

In the dynamic mounting manner, the shared memory is mounted in real time when cold start of the serverless service is triggered. This avoids a case in which the shared memory is mounted when cold start of the serverless service is not triggered, which causes memory resources to be idle. The dynamic mounting manner may be implemented by sensing a real-time event. Specifically, a management network element may release a real-time event, where the real-time event is an event that triggers cold start, and the server 100 may dynamically mount the shared memory based on the real-time event. The management network element is a network device that performs management in a management plane. The management network element may release the real-time event when detecting a start operation triggered by the user for the serverless service. The real-time event may be, for example, a Kubernetes event (also referred to as a k8s event for short). A pod in the server 100 may dynamically mount the shared memory based on the k8s event.

Before mounting the shared memory, the server 100 may further determine a size of the shared memory that needs to be mounted. The server 100 may obtain meta information of the service code. The meta information of the service code includes a size of the service code. When the service code is a compressed code package, the meta information of the service code may further include a size of decompressed service code. The size of the decompressed service code may be obtained through prediction. The server 100 may determine the size of the shared memory based on the size of the service code or the size of the decompressed service code.

The server 100 may establish a mapping relationship between the size of the shared memory (for example, may be denoted as Y) and the size of the service code or the size of the decompressed service code (for example, may be denoted as X). The mapping relationship may be represented as Y=F(X). The mapping relationship may be linear or non-linear. This is not limited in this embodiment. In some embodiments, F(X)=kX+b, where k is a coefficient and b is an offset. The server 100 may substitute the size of the service code or the size of the decompressed service code into the mapping relationship, to determine the size of the shared memory.

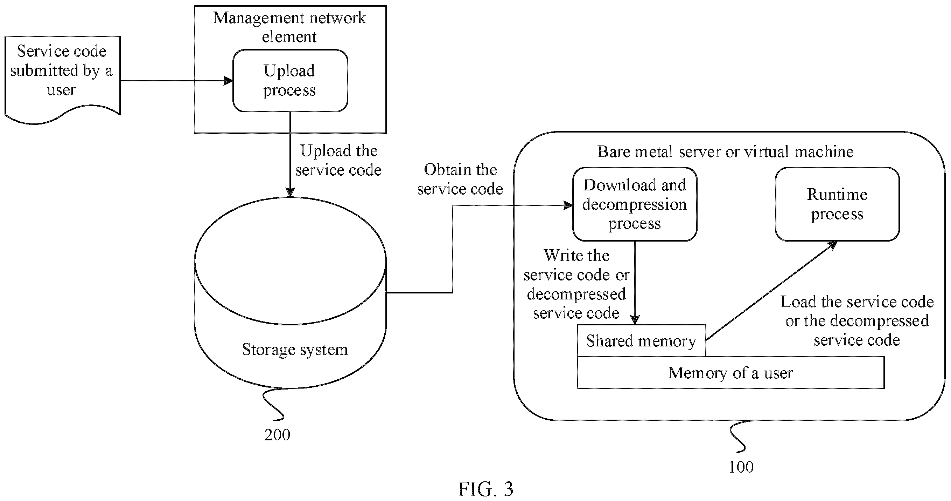

As shown in a schematic flowchart of the service start method shown in FIG. 3, the service code submitted by the user may be uploaded to a storage system by using the management network element in the management plane. The management network element may include an upload process, and the upload process is responsible for code upload. When uploading the service code, the upload process may further process the service code, obtain the meta information of the service code, and upload the meta information. The meta information of the service code may include the size of the service code. When the service code is a compressed code package, the meta information may include the size of the decompressed service code (also referred to as a size after decompression). The size after decompression may be predicted by using a compression rate corresponding to a compression format of the service code. In some possible implementations, the meta information further includes a code packaging format (or a compression format) and a runtime language.

In this embodiment, the storage system may include a code storage system and a meta information storage system. The code storage system may be configured to store the service code, and the meta information storage system may be configured to store the meta information of the service code, such as the packaging format, the size, the size after decompression, or the runtime language. The code storage system and the meta information storage system may use different storage types. For example, the code storage system may use the S3 or the OBS, and the meta information storage system may use the editable text configuration daemon ETCD. In this way, an appropriate storage manner can be used for different data types, thereby improving storage performance.

In this embodiment, the server 100 may obtain the meta information of the code from the meta information storage system, for example, an ETCD cluster, and determine, based on the meta information (for example, the size of the service code or the size after decompression), the size of the shared memory that needs to be mounted. Then, the server 100 may mount a shared memory of a corresponding size based on the size of the shared memory that needs to be mounted.

S204: The server 100 obtains, from a storage device 200, the service code submitted by the user.

S206: The server 100 decompresses the service code to obtain decompressed service code.

S208: The server 100 stores the decompressed service code in the shared memory.

The service code submitted by the user may be a compressed code package. After obtaining the compressed code package from a storage system of the storage device 200, the server 100 may start a code decompression container, where the code decompression container is configured to: decompress the obtained service code and store the decompressed service code in the shared memory. Specifically, a decompression process may be encapsulated in the code decompression container, and the decompression process may decompress the service code, and store the decompressed service code in the shared memory.

It should be noted that code downloading and decompression may be implemented by one container, and a download and decompression process may be encapsulated in the container. As shown in FIG. 3, the server 100 may obtain the compressed code package from the storage system by using the download and decompression process, and then the server 100 may decompress, based on the compression format of the compressed code package, the compressed code package according to a corresponding decompression algorithm, to obtain decompressed service code. As shown in FIG. 3, the server 100 may decompress the compressed code package by using the download and decompression process, to obtain the decompressed service code. Then, the server 100 may store the decompressed service code in the shared memory.

It should be noted that S204 and S206 are merely an implementation of this embodiment of this application. In another possible implementation of this embodiment of this application, the server 100 may alternatively not perform the foregoing steps. For example, when the service code stored in the storage system is code that is not compressed, the server 100 may alternatively directly obtain the service code from the storage system, and store the service code in the shared memory.

In this embodiment, the server 100 writes the service code or the decompressed service code into the shared memory instead of the system disk, thereby avoiding frequent write system calls (write system calls), reducing an I/O delay caused by writing a file to the system disk, and reducing disk I/O overheads.

S210: The server 100 starts a service container.

Specifically, the service container is a container that runs the service code. The service container runs the service code by using the shared memory. A runtime process may be encapsulated in the service container, and the runtime process may load the decompressed service code from the shared memory, and execute the decompressed code, to execute a call request of the serverless service, thereby starting the serverless service.

It should be noted that, when the service code submitted by the user is service code that is not compressed, and the server 100 directly stores the service code in the shared memory, the runtime process may load the service code from the shared memory, and execute the service code, to execute the call request of the serverless service, thereby starting the serverless service.

In this embodiment, the server 100 may use a runtime process of a corresponding type based on a language type of the service code or the decompressed service code, to load the service code or the decompressed service code, and execute the service code or the decompressed service code, so as to execute the call request of the serverless service. For example, when the service code is mainly written in the Java language, the server 100 may use a Java runtime process to load the service code, and execute the service code, so as to execute the call request of the serverless service.

Further, when running of the serverless service is abnormal or completed, the server 100 may further unmount (unmount) the shared memory, to reclaim a memory resource. The server 100 may first clear the service code or the decompressed service code in the shared memory, and then unmount the shared memory.

Based on the foregoing content description, an embodiment of this application provides a service start method. In the method, the server 100 stores, in the shared memory, the service code submitted by the user, and starts the service container. The service container runs the service code by using the shared memory, thereby reducing an I/O delay caused by reading the service code from a system disk, shortening a start time, improving cold start efficiency, and meeting a performance requirement of the user. In addition, in the method, the service code is stored in the shared memory, thereby reducing an I/O delay caused by writing a file to the system disk, further shortening the start time, and improving cold start efficiency. In addition, in the method, an idle memory resource in a cluster (for example, a cloud computing cluster of a cloud platform) may be fully used as the shared memory, thereby improving resource utilization.

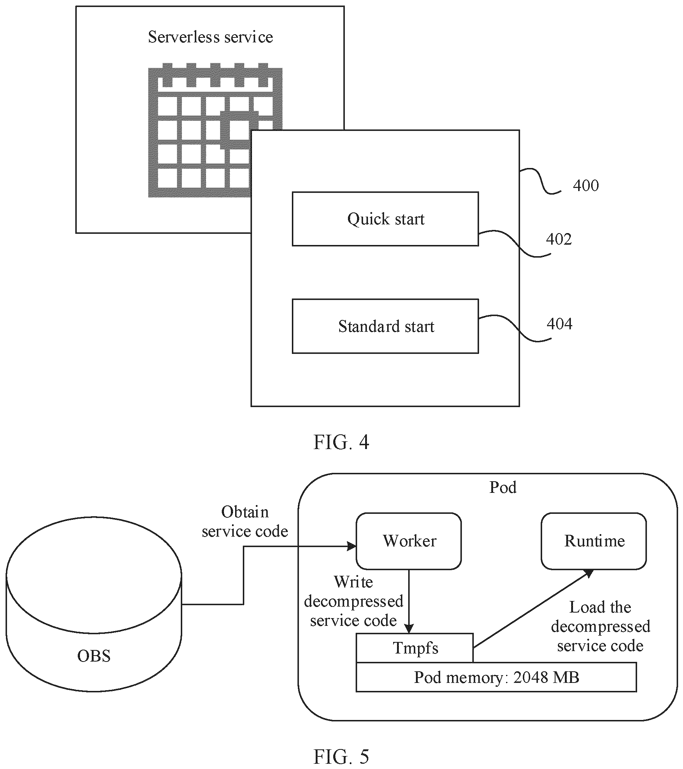

The embodiment shown in FIG. 2 describes the service start method. The service start method is a quick start method, and the cloud platform may provide the quick start method as a value-added service for the user to use. Specifically, the server 100 may present a start configuration interface to the user. The start configuration interface supports the user in configuring a start manner, for example, standard start or quick start. As shown in a diagram of a start configuration interface shown in FIG. 4, a start configuration interface 400 includes a quick start control 402. The user may configure the start manner as quick start by triggering the quick start control 402. Correspondingly, the server 100 may perform the service start method in the embodiment in FIG. 2, to improve cold start efficiency. In some possible implementations, the start configuration interface 400 may further include a standard start control 404. The user may configure the start manner as standard start by triggering the standard start control 404. Correspondingly, the server 100 may start the serverless service in a conventional start method.

The foregoing describes a procedure and a triggering manner of the service start method, and the following provides descriptions with reference to a specific scenario.

Refer to a diagram of a scenario of a service start method shown in FIG. 5. As shown in FIG. 5, a user may first configure a type of emptyDir as a memory, to implement static mounting of a shared memory. In this example, the shared memory is implemented by using tmpfs. When mounting the shared memory, the server 100 may obtain a size after decompression of a compressed code package from a meta information storage system like an ETCD (not shown in FIG. 5), determine a size of the shared memory based on the size after decompression, and then the server 100 may mount a shared memory of a corresponding size.

The server 100 may create a pod. The server 100 may start a code decompression container and a service container in the pod. The code decompression container and service container belong to a same pod. A download and decompression process is encapsulated in the code decompression container, and the process is also referred to as a worker (worker) process. A runtime (Runtime) process is encapsulated in the service container.

The worker process may download, from the OBS, service code submitted by the user. The service code is a compressed code package. The worker process may decompress the compressed code package to obtain decompressed service code, and then write the decompressed service code into the tmpfs. In this way, I/O overheads generated during code decompression can be reduced. Then, the runtime process may load the decompressed service code from the tmpfs, and execute the decompressed service code, to execute a call request of the serverless service, and start the serverless service. In this way, I/O overheads generated during code hot loading can be reduced.

It should be further noted that the service start method in embodiments of this application is implemented based on the shared memory. The shared memory may be alternatively used in another scenario in which a system delay related to download, decompression, and the like needs to be alleviated and optimized, or may be used in a system performance optimization scenario in which a data source size needs to be sensed and read and write system calls (read and write system calls) need to be improved. For example, the shared memory may be used in a cache system (cache system) to reduce I/O overheads for caching code or another type of data.

Based on the service start method provided in embodiments of this application, an embodiment of this application further provides a service start apparatus as described above. The following describes the service start apparatus provided in this embodiment of this application with reference to the accompanying drawings.

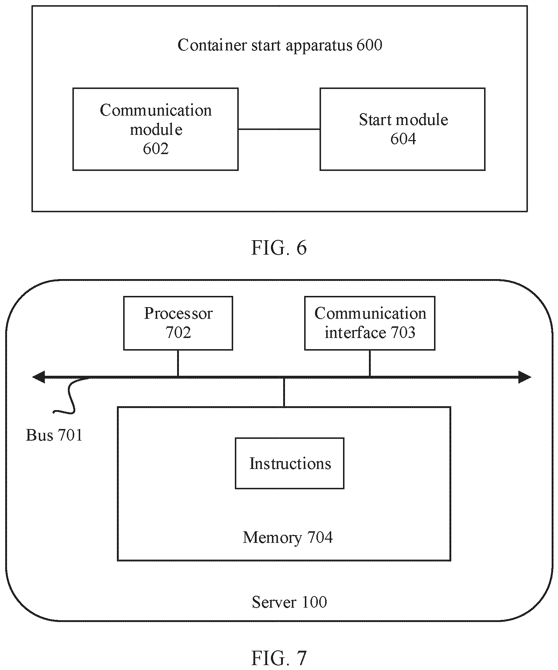

Refer to a diagram of a structure of a service start apparatus shown in FIG. 6. The apparatus 600 is used in a serverless service, and the apparatus 600 includes:
a communication module 602, configured to obtain service code submitted by a user, where
the communication module 602 is further configured to store the service code in a shared memory; and
a start module 604, configured to start a service container, where the service container runs the service code by using the shared memory.

In some possible implementations, the communication module 602 is specifically configured to:
store the decompressed service code in the shared memory.

In some possible implementations, the start module 604 is further configured to:
start a code decompression container, where the code decompression container is configured to: decompress the obtained service code and store the decompressed service code in the shared memory.

In some possible implementations, both the service container and the code decompression container are deployed on a bare metal server or a virtual machine.

In some possible implementations, the shared memory is located in a server for deploying the service container and the code decompression container.

In some possible implementations, the service container and the code decompression container belong to a same pod.

In some possible implementations, the shared memory is located in a server for deploying the service container, and the shared memory is independent of a memory of the user in the server.

In some possible implementations, the serverless service includes any one of the following: function-as-a-service FaaS, backend-as-a-service BaaS, or a microservice.

In some possible implementations, a size of the shared memory is determined based on meta information of the service code, and the meta information includes a size of the service code or a size of the decompressed service code.

In some possible implementations, the apparatus 600 further includes a mounting module.

The communication module 602 is further configured to obtain a configuration file, where a type of a default volume in the configuration file is configured as a memory.

The mounting module is specifically configured to mount the shared memory based on the configuration file.

In some possible implementations, the apparatus 600 further includes a mounting module.

The communication module 602 is further configured to receive a real-time event released by a management network element, where the real-time event is an event that triggers cold start of the serverless service.

The mounting module is specifically configured to dynamically mount the shared memory based on the real-time event.

In some possible implementations, the apparatus 600 further includes:
an unmounting module, configured to unmount the shared memory when running of the serverless service is abnormal or completed.

In some possible implementations, the shared memory is managed by a memory file system.

In some possible implementations, the communication module 602 is further configured to:
present a start configuration interface to the user;
receive a start manner configured by the user through the start configuration interface; and
when the start manner is quick start, perform the step of storing the service code in the shared memory.

The service start apparatus 600 according to this embodiment of this application may correspondingly perform the method described in embodiments of this application, and the foregoing and other operations and/or functions of the modules/units of the service start apparatus 600 are separately used to implement corresponding procedures of the methods in the embodiment shown in FIG. 2. For brevity, details are not described herein again.

An embodiment of this application further provides a server 100. The server 100 is configured to implement a function of the service start apparatus 600 shown in FIG. 6. The server 100 may be from a cloud server in a cloud environment, for example, a central server in a central cloud, or an edge server in an edge cloud. The cloud server supports elastic scaling. For example, specifications of the cloud server can be elastically scaled based on service requirements. In some embodiments, the server 100 may alternatively be a physical server.

FIG. 7 is a diagram of a structure of the server 100. As shown in FIG. 7, the server 100 includes a bus 701, a processor 702, a communication interface 703, and a memory 704. The processor 702, the memory 704, and the communication interface 703 communicate with each other over the bus 701.

The bus 701 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus.

The processor 702 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 703 is configured to communicate with the outside. For example, the communication interface 703 is configured to obtain service code submitted by a user, store the service code in a shared memory, and the like.

The memory 704 may include a volatile memory (volatile memory), for example, a random access memory (random access memory, RAM). The RAM may include the shared memory and a memory of the user. The memory 704 may alternatively include a non-volatile memory (non-volatile memory), for example, a read-only memory (read-only memory, ROM), a flash memory, a hard disk drive (hard disk drive, HDD), or a solid state drive (solid state drive, SSD).

The memory 704 stores computer-readable instructions, and the processor 702 executes the computer-readable instructions, so that the server 100 performs the foregoing service start method.

An embodiment of this application further provides a computer-readable storage medium. The computer-readable storage medium may be any usable medium that can be stored by the server 100, or a data storage device, like a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct the server 100 to perform the foregoing service start method.

An embodiment of this application further provides a computer program product. The computer program product includes one or more computer instructions. When the computer program instructions are loaded and executed on the server 100, the procedure or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, a computing device, or a data center to another website, computing device, or data center in a wired (for example, a coaxial cable, an optical fiber, or a digital subscriber line (DSL)) or wireless (for example, infrared, radio, or microwave) manner. The computer program product may be a software installation package. If any one of the foregoing service start methods needs to be used, the computer program product may be downloaded, and the computer program product may be executed on the server 100.

Descriptions of procedures or structures corresponding to the accompanying drawings have respective focuses. For a part that is not described in detail in a procedure or structure, refer to related descriptions of other procedures or structures.

## Claims

1. A service start method, used in a serverless service, wherein the method comprises:
obtaining service code submitted by a user;
storing the service code in a shared memory; and
starting a service container, wherein the service container runs the service code by using the shared memory.

2. The method according to claim 1, wherein the storing the service code in a shared memory comprises:
storing decompressed service code in the shared memory.

3. The method according to claim 1, wherein the method comprises:
starting a code decompression container, wherein the code decompression container is configured to: decompress the obtained service code and store decompressed service code in the shared memory.

4. The method according to claim 3, wherein both the service container and the code decompression container are deployed on a bare metal server or a virtual machine.

5. The method according to claim 3 or 4, wherein the shared memory is located in a server for deploying the service container and the code decompression container.

6. The method according to any one of claims 3 to 5, wherein the service container and the code decompression container belong to a same pod.

7. The method according to any one of claims 1 to 6, wherein the shared memory is located in the server for deploying the service container, and the shared memory is independent of a memory of the user in the server.

8. The method according to any one of claims 1 to 7, wherein the serverless service comprises any one of the following: function-as-a-service FaaS, backend-as-a-service BaaS, or a microservice.

9. The method according to any one of claims 1 to 8, wherein a size of the shared memory is determined based on meta information of the service code, and the meta information comprises a size of the service code or a size of the decompressed service code.

10. The method according to any one of claims 1 to 9, wherein the method further comprises:
obtaining a configuration file, wherein a type of a default volume in the configuration file is configured as a memory; and
mounting the shared memory based on the configuration file.

11. The method according to any one of claims 1 to 9, wherein the method further comprises:
receiving a real-time event released by a management network element, wherein the real-time event is an event that triggers cold start of the serverless service; and
dynamically mounting the shared memory based on the real-time event.

12. The method according to any one of claims 1 to 11, wherein the method further comprises:
unmounting the shared memory when running of the serverless service is abnormal or completed.

13. The method according to any one of claims 1 to 12, wherein the shared memory is managed by a memory file system.

14. The method according to any one of claims 1 to 13, wherein the method further comprises:
presenting a start configuration interface to the user;
receiving a start manner configured by the user through the start configuration interface; and
when the start manner is quick start, performing the step of storing the service code in the shared memory.

15. A service start apparatus, used in a serverless service, wherein the apparatus comprises:
a communication module, configured to obtain service code submitted by a user, wherein
the communication module is further configured to store the service code in a shared memory; and
a start module, configured to start a service container, wherein the service container runs the service code by using the shared memory.

16. The apparatus according to claim 15, wherein the communication module is specifically configured to:
store decompressed service code in the shared memory.

17. The apparatus according to claim 16, wherein the start module is further configured to:
start a code decompression container, wherein the code decompression container is configured to: decompress the obtained service code and store the decompressed service code in the shared memory.

18. The apparatus according to claim 17, wherein both the service container and the code decompression container are deployed on a bare metal server or a virtual machine.

19. The apparatus according to claim 17 or 18, wherein the shared memory is located in a server for deploying the service container and the code decompression container.

20. The apparatus according to any one of claims 17 to 19, wherein the service container and the code decompression container belong to a same pod.

21. The apparatus according to any one of claims 15 to 20, wherein the shared memory is located in the server for deploying the service container, and the shared memory is independent of a memory of the user in the server.

22. The apparatus according to any one of claims 15 to 21, wherein the serverless service comprises any one of the following: function-as-a-service FaaS, backend-as-a-service BaaS, or a microservice.

23. The apparatus according to any one of claims 15 to 22, wherein a size of the shared memory is determined based on meta information of the service code, and the meta information comprises a size of the service code or a size of the decompressed service code.

24. The apparatus according to any one of claims 15 to 23, wherein the apparatus further comprises a mounting module;
the communication module is further configured to obtain a configuration file, wherein a type of a default volume in the configuration file is configured as a memory; and
the mounting module is specifically configured to mount the shared memory based on the configuration file.

25. The apparatus according to any one of claims 15 to 23, wherein the apparatus further comprises a mounting module;
the communication module is further configured to receive a real-time event released by a management network element, wherein the real-time event is an event that triggers cold start of the serverless service; and
the mounting module is specifically configured to dynamically mount the shared memory based on the real-time event.

26. The apparatus according to any one of claims 15 to 25, wherein the apparatus further comprises:
an unmounting module, configured to unmount the shared memory when running of the serverless service is abnormal or completed.

27. The apparatus according to any one of claims 15 to 26, wherein the shared memory is managed by a memory file system.

28. The apparatus according to any one of claims 15 to 27, wherein the communication module is further configured to:
present a start configuration interface to the user;
receive a start manner configured by the user through the start configuration interface; and
when the start manner is quick start, perform the step of storing the service code in the shared memory.

29. A server, wherein the server comprises a processor and a memory; and
the processor executes a computer program of the memory, so that the server performs the method according to any one of claims 1 to 14.

30. A computer-readable storage medium, comprising computer-readable instructions, wherein the computer-readable instructions are used to implement the method according to any one of claims 1 to 14.

31. A computer program product, comprising computer-readable instructions, wherein the computer-readable instructions are used to implement the method according to any one of claims 1 to 14.
